# EUROPEAN PATENT APPLICATION

(11) **EP 1 732 018 A2**
(43) Date of publication of application: **13.12.2006**
(21) Application number: 06252101.8
(22) Date of filing: 18.04.2006
(51) Int. Cl.: G06F 17/30

(54) **Improvements in and relating to RFID**

(30) Priority: 10.06.2005 KR 2005049701
(71) Applicant: Samsung Electronics Co., Ltd., Suwon-si, Gyeonggi-Do (KR)
(72) Inventor: Jeon, Yu-seong (103) 1032-12 Yeongtong-dong, Gyeonggi-do (KR); Jeon, Seung-hun 301-603 Hyundai 3-cha Apt.,, Seoul (KR); Choi, Myoung-soon, Suwon-si, Gyeonggi-go (KR)
(74) Representative: Clark, David James

(57) **Abstract**

A method and apparatus for outputting data by using information in a radio frequency identification (RFID) tag are provided. The data output method includes: receiving a response signal, including an address of a server having data on at least one or more items, from an RFID tag providing a function for identifying an arbitrary object by using a radio frequency; requesting the server having the data on at least one or more items among the items to provide the data, based on the address of the server included in the response signal; and outputting data corresponding to a response to the request. By doing so, a large amount of data that cannot be stored in an RFID tag due to insufficient memory capacity of the RFID tag can be output to users.

## Description

Methods and apparatuses consistent with the present invention relate to radio frequency identification (RFID).

RFID is a technology in which objects, including animals as well as inanimate objects, can be identified using radio frequencies. RFID allows objects to be identified accurately from a distance. Due to these features, RFID is expected to replace contact-type barcodes, and the use of RFID technology has been gradually increasing.

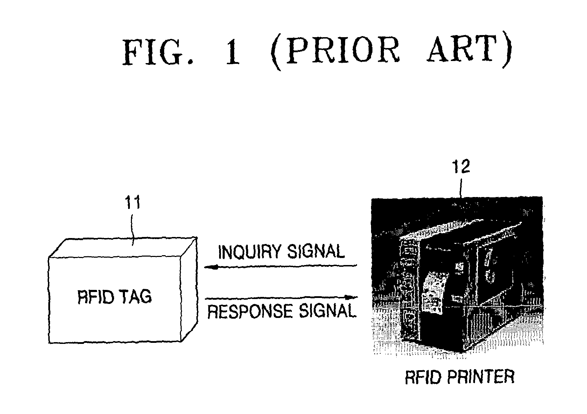

FIG. 1 is a diagram illustrating a structure of a conventional RFID system.

Referring to FIG. 1, the conventional RFID system includes an RFID tag 11 which is attached to an object and an RFID printer 12 having a function of an RFID reader.

If the RFID printer 12 transmits an inquiry signal to the RFID tag 11 to retrieve the information on the RFID tag 11, the RFID tag 11 transmits a response signal including the retrieved information. The RFID printer 12 prints the information included in the response signal.

However, it is desirable that the RFID tag 11 should be easily attached to the object, and that the RFID tag 11 should be small. These requirements constrain the size of a memory mounted on the RFID tag to a small capacity, and the amount of information that such a memory can hold is therefore very small. Owing to the small amount of information stored in the memory, the information that the RFID printer 12 can output to users is limited.

According to an aspect of the present invention, there is provided a data output method comprising: a data output method comprising: receiving a response signal from a radio frequency identification (RFID) tag which identifies an arbitrary object by using a radio frequency, the response signal comprising an address of a server having data on at least one item; based on the address of the server included in the response signal, requesting the server having the data on the at least one item, to provide the data; and outputting data corresponding to a response to the request.

According to another aspect of the present invention, there is provided a data output apparatus comprising: a data output apparatus comprising: an RFID reader which receives a response signal from a radio frequency identification (RFID) tag which identifies an arbitrary object by using a radio frequency, the response signal comprising an address of a server having data on at least one item; a request unit which requests the server having the data on the at least one item to provide the data, based on the address of the server included in the response signal; and an output unit which outputs data corresponding to a response to the request.

According to another aspect of the present invention, there is provided a transmission and reception method of an RFID tag that identifies an arbitrary object by using a radio frequency, the method comprising: receiving an inquiry signal to retrieve the RFID tag; and transmitting a response signal, which comprises the address of a server having data on at least one or more items, as a response to the received inquiry signal.

According to a another aspect of the present invention, there is provided an RFID tag which identifies an arbitrary object by using a radio frequency, the RFID tag comprising: a reception unit which receives an inquiry signal to retrieve the RFID tag; and a transmission unit that transmits a response signal, including an address of a server having data on at least one or more items, as a response to the received inquiry signal.

According to other aspects of the present invention, there is provided a computer readable recording medium having embodied thereon a computer program for executing the RFID transmission and reception method, and/or having embodied thereon a computer program for executing the data output method.

In this way, preferred embodiments of the present invention provides a method and apparatus capable of easily outputting a large amount of data to users despite the limited memory capacity of an RFID tag.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a diagram illustrating a structure of a conventional RFID system;
FIG. 2 is a flowchart illustrating a communication method in an RFID system according to an exemplary embodiment of the present invention;
FIG. 3 is a diagram illustrating a structure of an RFID tag according to an exemplary embodiment of the present invention;
FIG. 4 is a diagram illustrating a structure of a data output apparatus according to an exemplary embodiment of the present invention;
FIG. 5 is a diagram illustrating a structure of a data output apparatus according to an exemplary embodiment of the present invention in the form of an RFID printer;
FIG. 6 is a flowchart illustrating a transmission and reception method of an RFID tag according to an exemplary embodiment of the present invention; and
FIG. 7 is a flowchart illustrating a data output method according to an exemplary embodiment of the present invention.

The present invention will now be described more fully with reference to the accompanying drawings, in which exemplary embodiments of the invention are shown.

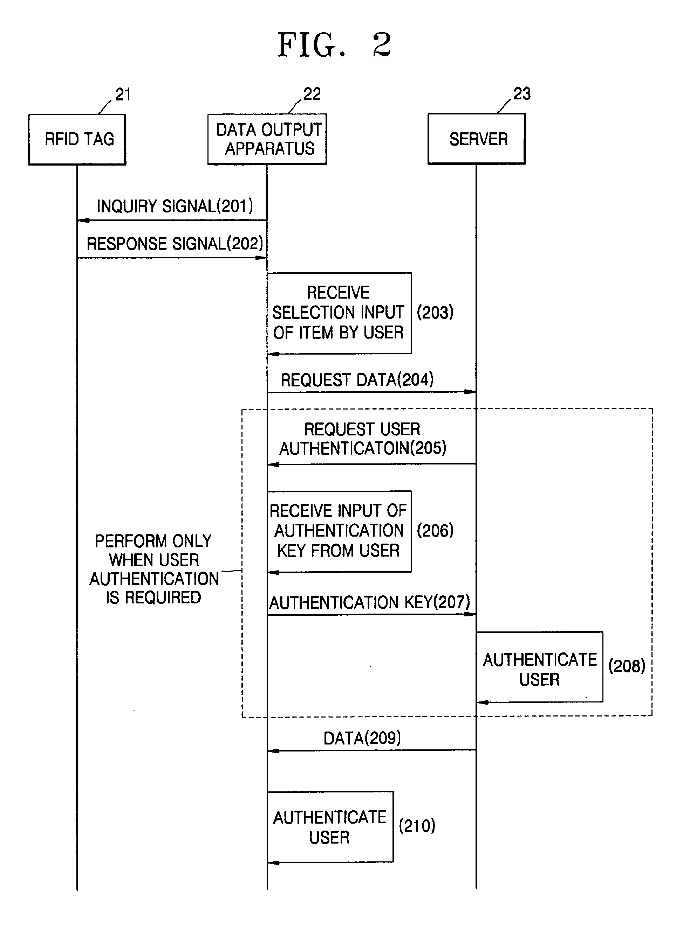

FIG.2 is is a flowchart illustrating a communication method in an RFID system according to an exemplary embodiment of the present invention.

Referring to FIG. 2, the RFID system is formed with an RFID tag 21 providing a function for identifying an arbitrary object by using radio frequencies, a data output apparatus 22 having an RFID reader for reading information stored in the RFID tag 21 using radio frequencies, and a server 23 providing data on items.

In operation 201, the data output apparatus 22 transmits an inquiry signal to the RFID tag 21, to retrieve the information stored in the RFID tag 21.

In operation 202, if the inquiry signal from the data output apparatus 22 is received, the RFID tag 21 transmits a response signal, which includes the names of at least one or more items and the address of the server 23 having data on the items, to the data output apparatus 22. In the current embodiment, and other embodiments of the present invention, the response signal includes the name of an item to allow a user to identify the item, and includes the address of the server 23 in order to indicate that the server has data which cannot be stored in the RFID tag 21 due to insufficient memory capacity of the RFID tag 21.

Examples of the items can include a product, a document, or a media file. The response signal can include at least one or more of the name of a product, the name of a document, and the name of a media file, and include at least one or more of the address of a server having data on products, the address of a server having data on documents, and the address of a server having data on media files. In particular, if the data output apparatus 22 is an RFID printer, the media file can be an image file.
In operation 203, if the response signal from the RFID tag 21 is received, the data output apparatus 22 displays or otherwise outputs the name of the item included in the response signal to a user, and receives an input of one item selected by the user who recognizes the display.

In operation 204, based on the address of the server 23 included in the response signal, the data output apparatus 22 requests that the server 23 having data on the item selected in operation 203 provide the data.

In operation 205, if the data request from the data output apparatus 22 is received and user authentication for the requested data is required, the server 23 requests authentication of the user from the data output apparatus 22. Also, in operation 205, if the data request from the data output apparatus 22 is received and user authentication for the requested data is not required, the server 23 performs operation 209. User authentication is required for predetermined data in cases when the secrecy of the predetermined data should be guaranteed, or when only authorized users are allowed to access the predetermined data.

In operation 206, if the authentication request from the server 23 is received, the data output apparatus 22 requests the user to input an authentication key, and receives an input of the authentication key by the user who recognizes the request.
In operation 207, the data output apparatus 22 transmits the authentication key input in operation 206, to the server 23.

In operation 208, if the authentication key from the data output apparatus 22 is received, the server 23 authenticates the user by using the authentication key.

In operation 209, if user authentication is not required and the data request from the data output apparatus 22 is received, the server 23 transmits the data to the data output apparatus 22. Also, in operation 209, if user authentication is required and the user authentication of operation 208 is successful, the server 23 transmits the data to the data output apparatus 22.

In operation 210, if the data from the server 23 is received, the data output apparatus 22 outputs the data to the user.

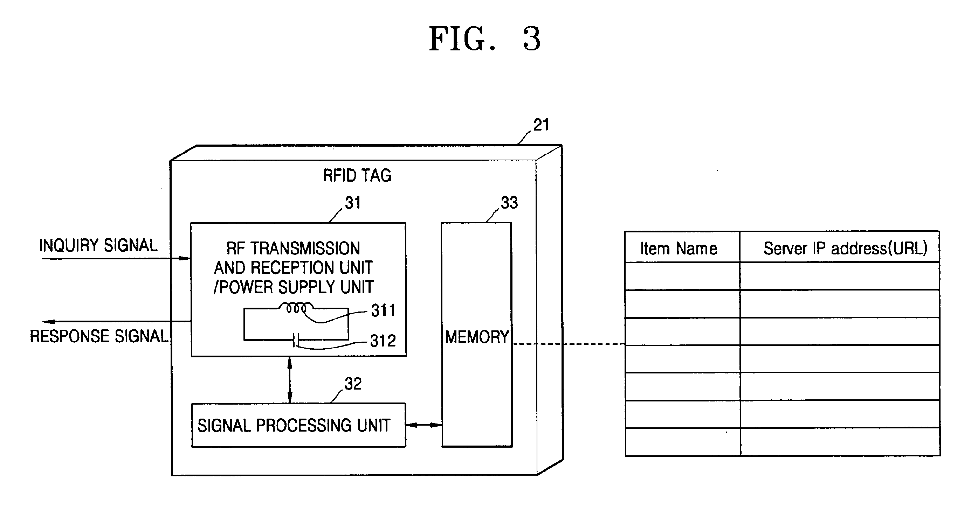

FIG. 3 is a diagram illustrating a structure of the RFID tag 21 according to an exemplary embodiment of the present invention.

Referring to FIG. 3, the RFID tag 21 is formed with a radio frequency (RF) transmission and reception unit/power supply unit 31, a signal processing unit 32, and a memory 33. Generally, the RF transmission and reception unit/power supply unit 31 can be implemented by a resonant circuit formed with a coil antenna 311 and a capacitor 312, and the signal processing unit 32 and the memory 33 can be implemented by an integrated circuit (IC).

If the inquiry signal to retrieve the RFID tag 21 from the data output apparatus 22 is received, the RF transmission and reception unit/power supply unit 31 outputs the inquiry signal to the signal processing unit 32. Also, if the response signal to the inquiry signal from the signal processing unit 32 is input, the RF transmission and reception unit/power supply unit 31 transmits the response signal to the data output apparatus 22.

More specifically, by using a radio frequency determined by values of the coil antenna 311 and the capacitor 312 in order for the radio frequency to correspond to the radio frequency used by the data output apparatus 22, the RF transmission and reception unit/power supply unit 31 receives the inquiry signal, and transmits the response signal, including the address of the server 23 having the names of at least one or more items and data on these items. Also, the RF transmission and reception unit/power supply unit 31 generates power by electromagnetic induction of the inquiry signal received in the coil antenna 311, and supplies the power to the IC corresponding to the signal processing unit 32 and the memory 33. However, the RF transmission and reception unit/power supply unit 31 can have a separate power source supply.

If the inquiry signal from the RF transmission and reception unit/power supply unit 31 is received, the signal processing unit 32 reads the address of the server 23 having the names of at least one or more items, and data on these items, and generates a response signal including the names of the items and the address of the server 23. Then, by outputting this response signal to the RF transmission and reception unit/power supply unit 31, the signal processing unit 32 processes the inquiry signal.

In the memory 33, the address of the server 23 having the names of at least one or more items, and data on these items, is stored. In particular, in the memory 33, is a table is stored in which an entry is allocated to each item so that the name of the item corresponds to the address of the server 23 having data on the item.

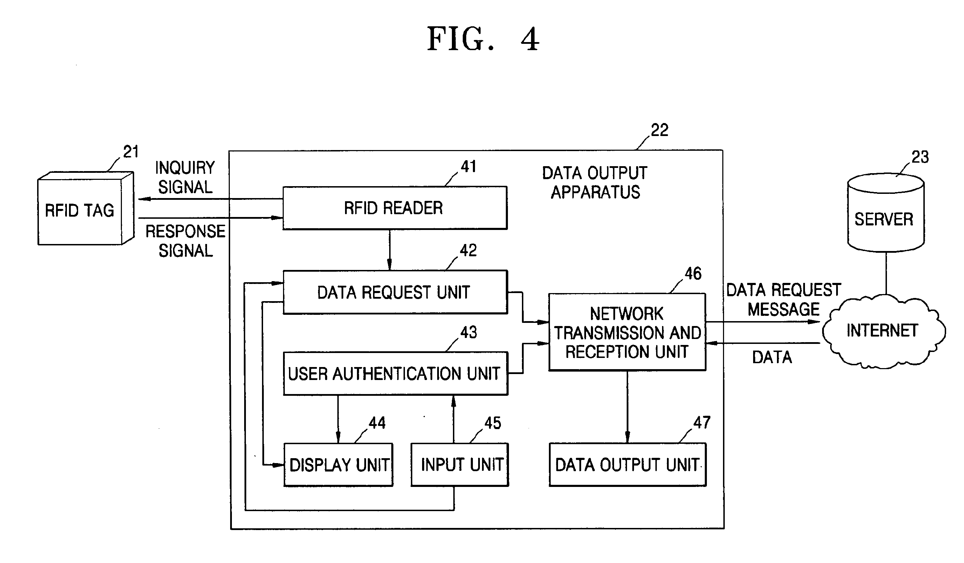

FIG. 4 is a diagram illustrating a structure of a data output apparatus according to an exemplary embodiment of the present invention.

Referring to FIG. 4, the data output apparatus is formed with an RFID reader 41, a data request unit 42, a user authentication unit 43, a display unit 44, an input unit 45, a network transmission and reception unit 46, and a data output unit 47.

The RFID reader 41 generates an inquiry signal to retrieve the RFID tag 21 and transmits the inquiry signal to the RFID tag 21. If a response signal to the inquiry signal is received by the RFID reader 41, the RFID reader 41 reads the response signal and outputs the result to the data request unit 42. More specifically, the RFID reader 41 receives the response signal by using a radio frequency corresponding to the radio frequency used by the RFID tag 21, and transmits the response signal including the address of the server 23 having the names of at least one or more items, and data on these items.

If the address of the server 23 having the names of at least one or more items, and data on these items, is input by the RFID reader 41, the data request unit 42 outputs the names of the item to the display unit 44. Also, based on the address of the server 23 input from the RFID reader 41, the data request unit 42 generates a data request message requesting data on an item selected by the user, who can recognize the name of the item displayed by the display unit 44, to the server 23 having the data on the item selected by the user, and outputs the data request message to the network transmission and reception unit 46. This data request message is a kind of Internet protocol (IP) packet arriving at the server 23 through the Internet, and the IP address of the server 23 is recorded in the IP header of the data request message.

If the authentication request message requesting authentication of the user is input by the network transmission and reception unit 46 to the user authentication unit 43, the user authentication unit 43 commands the display unit 44 to display a message requesting the user to input an authentication key. If the authentication key of the user is input from the input unit 45, the user authentication unit 43 generates an authentication key message including the authentication key, and outputs the authentication key message to the network transmission and reception unit 46. The authentication key message is a kind of IP packet arriving at the sever 23 through the Internet, and the IP address of the server 23 is recorded in the IP header of the authentication key message.

If an authentication success message from the network transmission and reception unit 46 indicating that user authentication is successful is received, the user authentication unit 43 commands the display unit 44 to display that user authentication is successful. However, if an authentication failure message from the network transmission and reception unit 46 indicating that user authentication has failed is received, the user authentication unit 43 commands the display unit 44 to display that the user authentication has failed, and commands the display unit 44 to display again a message requesting the user to input an authentication key.

If the names of at least one or more items are input from the data request unit 42, the display unit 44 displays these to the user. Also, if the user authentication unit 43 commands the display unit 44 to display a message requesting the user to input an authentication key, the display unit 44 displays this to the user. Additionally, if the command to display that user authentication is successful is received, the display unit 44 display this to the user. Similarly, if the command to display that user authentication has failed is received, the display unit 44 displays this to the user. For example, the display unit 44 may be a liquid crystal display (LCD) monitor, or a cathode ray tube (CRT) monitor.

If a signal indicating that any one of the names of the items is selected as input by the user who recognizes the names of the items displayed by the display unit 44, the input unit 45 outputs the signal to the data request unit 42. Also, if the authentication key is input by the user who recognizes the authentication request displayed by the display unit 44, the input unit 45 outputs the authentication key to the user authentication unit 43. Generally, the user selects an item by using an input device, such as a keyboard or a mouse.

If a data request message from the data request unit 42 is input, the network transmission and reception unit 46 transmits the data request message to the server 23 through the Internet. If an authentication key message from the user authentication unit 43 is input, the network transmission and reception unit 46 transmits the authentication key message to the server 23 through the Internet as well. Nodes existing between the data output apparatus 22 and the server 23 forward such messages to the server 23 by referring to the IP addresses recorded in the IP headers of these messages.

If an authentication request message from the server 23 which received the data request message is received, the network transmission and reception unit 46 outputs the authentication request message to the user authentication unit 43.

If an authentication success message or an authentication failure message from the server 23 which received the authentication key message is received, the network transmission and reception unit 46 outputs the authentication success message or the authentication failure message to the user authentication unit 43.

If a data message, including data on an item selected by the user, transmitted by the server 23 which received the data request message or transmitted the authentication success message is received, the network transmission and reception unit 46 outputs the data message to the data output unit 47. If the server 23 does not request user authentication, the server 23 does not receive an authentication key message, and therefore the network transmission and reception unit 46 receives the data message from the server 23 which received the data request message.

If the data message from the network transmission and reception unit 46 is input, the data output unit 47 outputs data included in the data messages to the user. The data output unit 47 can output data using a variety of methods. One example, which uses an RFID printer 220, will now be explained.

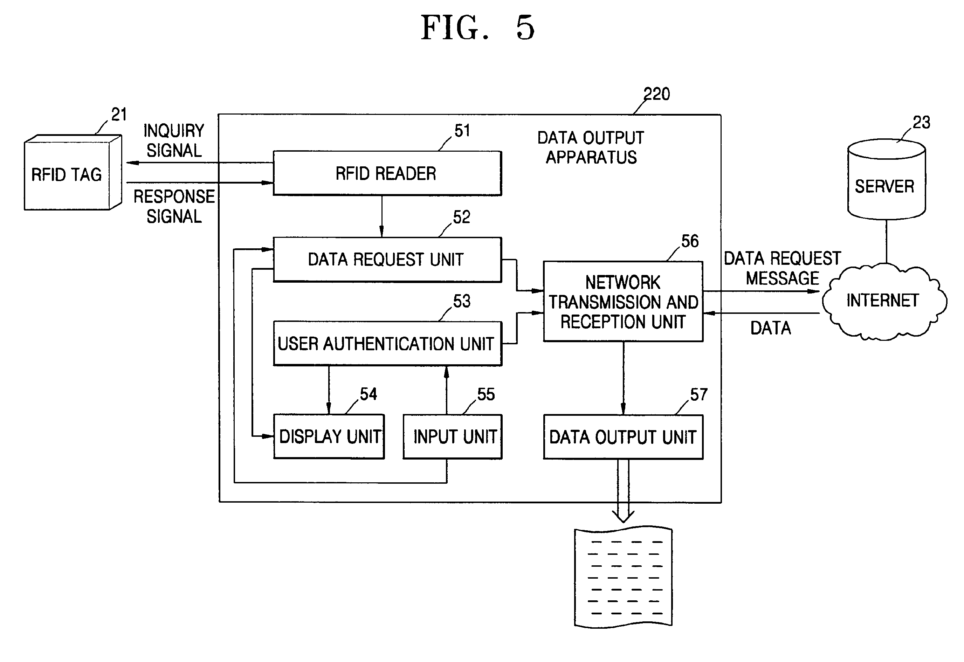

FIG. 5 is a diagram illustrating a structure of an RFID printer according to an exemplary embodiment of the present invention.

Referring to FIG. 5, the RFID printer 220 according to the current embodiment of the present invention is an example of the data output apparatus 22 illustrated in FIG. 4, and includes an RFID reader 51, a data request unit 52, a user authentication unit 53, a display unit 54, an input unit 55, a network transmission and reception unit 56, and a data output unit in the form of a data printing unit 57.

As described above, the structure of the RFID printer 220 is similar to the data output apparatus 22 illustrated in FIG. 4. However, the data output unit 47 of the data output apparatus 22 is formed by the data printing unit 57 which prints data. That is, the data printing unit 57 outputs data using a printing method.

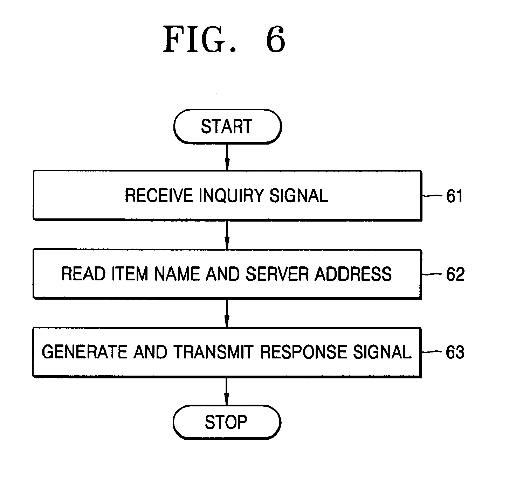

FIG. 6 is a flowchart of a transmission and reception method of an RFID tag 21 according to an exemplary embodiment of the present invention.

Referring to FIG. 6, the transmission and reception method of the RFID tag 21 according to the current embodiment includes the following operations. The transmission and reception method of an RFID tag 21 according to a preferred embodiment of the present invention are comprised of the operations processed sequentially illustrated. Accordingly, though omitted in the following explanation, the details explained above in relation to the example embodiment RFID tag 21 are also applied to the transmission and reception method according to the current embodiment.

In operation 61, the RFID tag 21 receives an inquiry signal to retrieve the information on the RFID tag 21.

If the inquiry signal is received in operation 61, the RFID tag 21 reads the address of the server 23 having the names of at least one or more items, and data on the items from the memory 33 in operation 62.

In operation 63, the RFID tag 21 generates a response signal including the names of the items and the address of the server 23 that are read in the operation 62, and transmits the response signal to the data output apparatus 22.

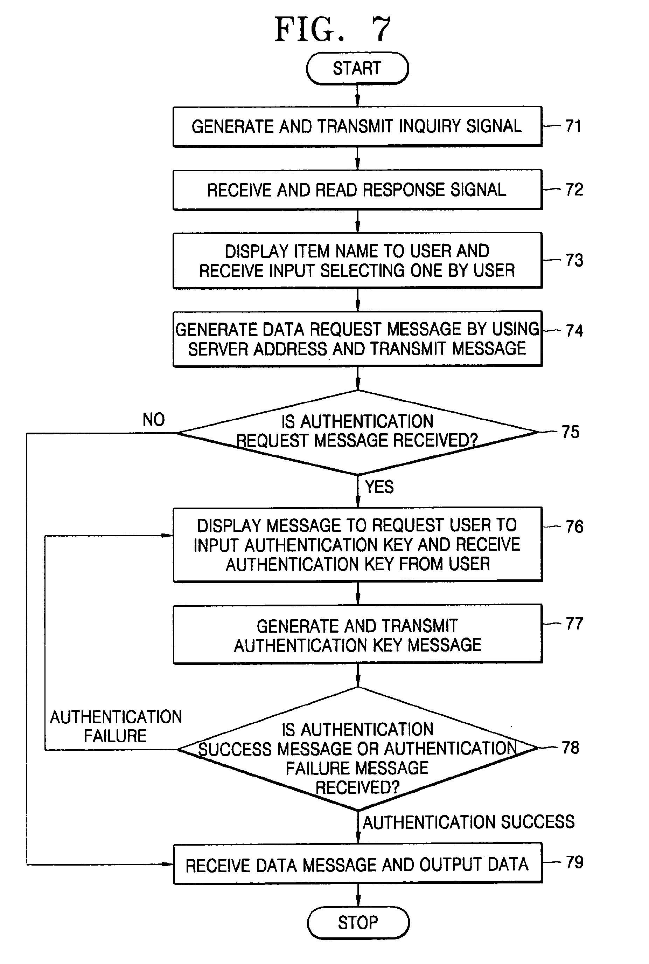

FIG. 7 is a flowchart illustrating a data output method according to an exemplary embodiment of the present invention.

Referring to FIG. 7, the data output method includes the following operations. The data output method according to the current embodiment are comprised of the operations processed sequentially in the data output apparatus illustrated in FIG. 4. Accordingly, though omitted in the following explanation, operations explained above in relation to the data output apparatus 22 also apply to the data output method of the current embodiment

In operation 71, the data output apparatus 22 generates an inquiry signal to retrieve the information on the RFID tag 21 and transmits this inquiry signal to the RFID tag 21.

In operation 72, the data output apparatus 22 receives a response signal to the inquiry signal from the RFID tag 21, which received the inquiry signal transmitted in operation 71, and reads the response signal.

In operation 73, the data output apparatus 22 displays the names of at least one or more items read in operation 72 to the user, and receives an input selecting any one of them by the user who recognizes the items.

In operation 74, by using the address of the server 23 having data on the item selected in operation 73, the data output apparatus 22 generates a data request message requesting the server 23 to provide data, and transmits the data request message to the server 23 through the Internet.

In operation 75, it is determined whether an authentication request message from the server 23, which received the data request message transmitted in operation 74 requesting authentication of the user, is received. If it is determined that the authentication request message is received in operation 75, the data output apparatus 22 displays a message requesting an authentication key, and receives an input of the authentication key from the user who recognizes the request in operation 76. On the other hand, if it is determined that the authentication request message is not received in operation 75, operation 79 is performed.

In operation 77, by using the address of the server 32, the data output apparatus 22 generates an authentication key message including the authentication key input in operation 75, and transmits the authentication key message to the server 23 through the Internet.

In operation 78, if an authentication success message from the server 23, which received the authentication key message transmitted in operation 77, indicating that user authentication is successful, is received, the data output apparatus 22 displays that user authentication is successful, and operation 79 is performed. Also, in operation 78, if an authentication failure message indicating that user authentication has failed is received, the data output apparatus 22 displays that user authentication has failed, and operation 76 is performed.

In operation 79, the data output apparatus 22 receives a data message, including data on the item selected by the user, from the server 23 which received the data request message transmitted in operation 74 or the server 23 which transmitted the user authentication success message received in operation 77, and outputs data included in the data message to the user.

The methods of the exemplary embodiments of the present invention can be written as computer programs and can be implemented in general-use digital computers that execute the programs using a computer readable recording medium. Also, the data structure used in the embodiments of the present invention described above can be recorded on a computer readable recording medium through a variety of ways.

Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

According to preferred embodiments of the present invention, an RFID tag provides the address of a server having data to a data output apparatus such as an RFID printer and by doing so, a large amount of data that cannot be stored in the RFID tag due to the insufficient memory capacity of the RFID tag can be output to users.
In particular, according to preferred embodiments of the present invention, the RFID tag provides the IP address or URL of the server to the data output apparatus such that data stored by an arbitrary server located on the Internet can be easily output to the user.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data output method comprising:
receiving a response signal (202) from a radio frequency identification (RFID) tag (21) which identifies an arbitrary object by using a radio frequency, the response signal (202) comprising an address of a server (23) having data on at least one item;
based on the address of the server included in the response signal (202), requesting the server (23) having the data on the at least one item, to provide the data; and
outputting data corresponding to a response to the request.

2. The method of claim 1, wherein the address of the server (23) is one of:
an Internet protocol address; and a uniform resource locator.

3. The method of claim 1 or 2, further comprising:
transmitting an inquiry signal (201) to retrieve the RFID tag and, wherein the response signal (202) is received as a response to the transmitted inquiry signal (201).

4. The method of claim 1, 2 or 3 wherein the response signal (202) further comprises a name of the item in order to allow a user to identify the item, and wherein data is requested on an item selected by the user who recognizes its name.

5. The method of claim 1, 2, 3 or 4 further comprising:
transmitting an authentication key (207) of the user to the server (23) if a request to authenticate the user (205) is received from the server (23); and
receiving the data from the server (23) which authenticates the user by using the transmitted authentication key,
wherein, in the outputting of the data, the received data is output.

6. The method of any preceding claim, wherein, the data is output by printing the data.

7. A data output apparatus (220) comprising:
an RFID reader (51) which receives a response signal from a radio frequency identification (RFID) tag (21) which identifies an arbitrary object by using a radio frequency, the response signal comprising an address of a server (23) having data on at least one item;
a request unit (52) which requests the server (23) having the data on the at least one item to provide the data, based on the address of the server (23) included in the response signal; and
an output unit (57) which outputs data corresponding to a response to the request.

8. The apparatus of claim 7, wherein the address of the server (23) is one of:
an Internet protocol address; and a uniform resource locator.

9. A computer readable recording medium having embodied thereon a computer program for executing a data output method, wherein the data output method comprises:
receiving a response signal (202) from a radio frequency identification (RFID) tag (21) which identifies an arbitrary object by using a radio frequency, the response signal (202) comprising an address of a server (23) having data on at least one item;
requesting the server (23) having the data on the at least one item, to provide the data based on the address of the server included (23) in the response signal; and
outputting data corresponding to a response to the request.

10. A transmission and reception method of a radio frequency identification (RFID) tag (21) which identifies an arbitrary object by using a radio frequency, the method comprising:
receiving an inquiry signal (201) to retrieve the RFID tag; and
transmitting a response signal (202), which comprises an address of a server (23) having data on at least one item, as a response to the received inquiry signal (201).

11. The method of claim 10, wherein the address of the server (23) is one of:
an Internet protocol address; and a uniform resources locator.

12. The method of claim 10 or 11, further comprising reading the address of the server (23) from a memory (33) of the RFID tag, and wherein, in the transmission of the response signal (202), the response signal comprising the read address of the server (23) is transmitted.

13. The method of claim 10, 11 or 12 wherein the response signal (202) further comprises a name of the item in order to allow a user to identify the item.

14. The method of claim 10, 11, 12 or 13, wherein the item is at least one of:
a product; a document; and a media file, and the response signal (202) comprises at least one of: the address of a server (23) having data on the product; the address of a server (23) having data on the document; and the address of a server (23) having data on the media file.

15. A radio frequency identification (RFID) tag (21)which identifies an arbitrary object by using a radio frequency, the RFID tag (21) comprising:
a reception unit (31) which receives an inquiry signal (201) to retrieve the RFID tag; and
a transmission unit (31) which transmits a response signal, including an address of a server (23) having data on at least one or more items, as a response to the received inquiry signal (201).

16. The RFID tag of claim 15, further comprising:
a signal processing unit (32) which reads the address of the server (23) having data on the at least one item, and
a memory (33) which stores the address of the server having the data on the at least one item.

17. The RFID tag of claim 16, wherein the signal processing unit (32) generates a response signal (202) which includes the address of the server (23) having the data on the at least one item.

18. The RFID tag of claim 15, 16 or 17 wherein power is generated in the RFID tag (21) by electromagnetic induction of the inquiry signal (201).

19. The RFID tag of claim 15, 16, 17 or 18 wherein the address of the server (23) is one of: an Internet protocol address; and a uniform resources locator.

20. A computer readable recording medium having embodied thereon a computer program for executing a transmission and reception method of a radio frequency identification (RFID) tag (21), wherein the transmission and reception method of the RFID tag (21) comprises:
receiving an inquiry signal (201) to retrieve the RFID tag; and
transmitting a response signal (202), including an address of a server having data on at least one item, as a response to the received inquiry signal (201).
